# EUROPÄISCHE PATENTSCHRIFT

(11) **EP 0 653 093 B1**
(45) Veröffentlichungstag und Bekanntmachung des Hinweises auf die Patenterteilung: **27.12.1996**
(21) Anmeldenummer: 93914616.3
(22) Anmeldetag: 06.07.1993
(51) Int. Cl.: G11B 20/10, G11B 20/00, H04L 25/36, H04L 5/24

(54) **VERFAHREN ZUR ÜBERTRAGUNG DIGITALER DATEN OHNE FESTE KOPPLUNG ZWISCHEN DEN TAKTFREQUENZEN UND DER ÜBERTRAGUNGSFREQUENZ**
METHOD OF TRANSMITTING DIGITAL DATA WITHOUT FIXED COUPLING BETWEEN THE CLOCK FREQUENCIES AND THE TRANSMISSION FREQUENCY
PROCEDE DE TRANSMISSION DE DONNEES NUMERIQUES SANS COUPLAGE FIXE ENTRE LES FREQUENCES D'HORLOGE ET LA FREQUENCE DE TRANSMISSION

(30) Priorität: 27.07.1992 DE 4224786
(43) Veröffentlichungstag der Anmeldung: 17.05.1995
(73) Patentinhaber: FRAUNHOFER-GESELLSCHAFT ZUR FÖRDERUNG DER ANGEWANDTEN FORSCHUNG E.V., 80636 München (DE)
(72) Erfinder: EBERLEIN, Ernst, D-91091 Grossenseebach (DE); KRÄGELOH, Stefan, D-91056 Erlangen (DE); POPP, Harald, D-90587 Tuchenbach (DE); HUPP, Jürgen, D-90419 Nürnberg (DE); SCHERL, Christian, D-91080 Uttenreuth (DE); KEYHL, Michael, D-90425 Nürnberg (DE); BUCHTA, Rainer, D-91083 Baiersdorf (DE); SEITZER, Dieter, D-91054 Erlangen (DE)
(86) Internationale Anmeldenummer: DE9300611
(87) Internationale Veröffentlichungsnummer: WO9403895

(56) Entgegenhaltungen:
- US-A- 3 754 098
- US-A- 4 413 289
- US-A- 4 750 167
- US-A- 4 841 550
- IBM TECHNICAL DISCLOSURE BULLETIN. Bd. 17, Nr. 7 , Dezember 1974 , NEW YORK US Seiten 1884 - 1886 FURTNEY, JR. 'DIGITAL PHASE-LOCKED LOOP'
- IBM TECHNICAL DISCLOSURE BULLETIN. Bd. 16, Nr. 9 , Februar 1974 , NEW YORK US Seite 3019 MALONE 'ACHIEVING FAST SYNC WITH MINIMUM TRANSIENT FOR A PARTICULAR PHASE DISCRIMINATOR'
- PATENT ABSTRACTS OF JAPAN vol. 16, no. 236 (E-1210)29. Mai 1992 & JP,A,04 047 731 (KOKUSAI ELECTRIC CO., LTD.) 17. Februar 1992

## Beschreibung

Die Erfindung bezieht sich auf ein Verfahren zur Übertragung digitaler Daten, insbesondere von Audiosignalen, bei welchem n digitale Eingangs-Abtastwerte mit einer ersten Taktfrequenz aus einer Signalquelle in einen Encoder geleitet, codiert und als Bitstrom über eine Datenleitung mit einer Übertragungsfrequenz in einen Decoder übertragen, decodiert und die decodierten Daten als n * k₁ /k₂ Ausgangs-Abtastwerte (k₁, k₂ = 1,2,3...) mit einer zweiten Taktfrequenz an einen Signalempfänger geleitet werden.

Bei solchen Verfahren (beschrieben z.B. in US-A-4 413 289), die häufig im Bereich der Datenverarbeitung eingesetzt werden, müssen die Taktfrequenzen möglichst genau aufeinander abgestimmt sein, um keinen Datenverlust zu erleiden.

In zunehmendem Maße werden die genannten Verfahren auch bei der Übertragung von Audiosignalen angewendet. Ein Verfahren, bei welchem die Audiosignale in einer signalverarbeitenden Einrichtung komprimiert und codiert anschließend übertragen und die übertragenen Daten decodiert und dekomprimiert werden, ist beispielsweise aus den PCT-Veröflentlichungen WO 88/001811 und WO 89/08357 bekannt. Auf diese Druckschriften sei zur Erläuterung der hier nicht näher erklärten Begriffe ausdrücklich Bezug genommen.

Die erste signalverarbeitende Einrichtung besteht aus einem Encoder, die zweite aus einem Decoder. Beide sind miteinander durch eine Übertragungsleitung verbunden. Überlicherweise entspricht die Zahl der Eingangs-Abtastwerte im Encoder der Zahl der Ausgangs-Abtastwerte des Decoders.

Bei einer Life-Übertragung müssen die erste Abtastfrequenz (fₐ₁, Encoder) und die zweite Abtastfrequenz (fₐ₂, Decoder) synchronisiert werden, da sonst der Datenpuffer der signalverarbeitenden Einrichtung zeitweise überläuft oder vollständig entleert wird, was sich störend auf die Audioübertragung auswirkt.

### Stand der Technik

Es ist bekannt, die beiden Frequenzen fₐ₁ und fₐ₂ dadurch zu synchronisieren, daß sie extern aus einem gemeinsamen Takt f_{Master} gewonnen und direkt in den Encoder bzw. Decoder eingespeist werden. Dies ist dann besonders einfach durchführbar wenn Encoder und Decoder räumlich nahe beieinander liegen und wenn fₐ₁ und fₐ₂ in einem einfachen Verhältnis zueinander und zum Takt f_{Master} stehen (z. B. f_{Master} = fₐ₁ = 2 * fₐ₂). Die Audio-Quelle, z. B. ein CD-Spieler, muß in diesem Fall extern synchronisierbar sein, also dazu geeignet sein, mit einer extern eingespeisten Frequenz fₐ₁ zu arbeiten. Wahlweise kann die Ausgangsfrequenz der Audio-quelle als f_{Master} verwendet werden. Bei größeren räumlichen Abständen zwischen Encoder und Decoder, oder bei Verhältnissen der Frequenzen zueinander, die nicht durch einfache Teilung gewonnen werden können, geht man zu einem anderen Verfahren über.

Bei einem weiteren bekannten Verfahren werden aus einem sowohl bei der Audioquelle als auch beim Audio-Verbraucher vorhandenen Takt mittels einer PLL (phase locked loop) die Takte fₐ₁ bzw. fₐ₂ gewonnen. Dafür muß ein soicher gemeinsamer Takt verfügbarer sein, wie z. B. der Takt einer ISDN-Leitung. Die Qualität der Abtastfrequenzen wird bei diesem Verfahren durch die Qualität der Übertragungsfrequenz bestimmt. Wenn die Übertragungsfrequenz mit einem Jitter behaftet ist, wird dieser auch auf die Abtastfrequenzen übertragen. Darüber hinaus unterliegt die Auswahl der einstellbaren Abtastfrequenzen aus dem vorgegebenen Takt großen Einschränkungen.

Eine weitere Möglichkeit zur Abstimmung der Abtastfrequenzen bietet der Einsatz fester Schwingquarze zum Erzeugen der Abtastfrequenzen. Sie eignet sich jedoch nur für Anwendungen, bei denen das Signal auf der Strecke zwischen Quelle und Verbraucher gespeichert wird, da zwischen den Quarzen keine feste Phasenbeziehung besteht und ihre Frequenzen in der Regel leicht voneinander abweichen. Deshalb würden bei Life-Übertragungen Störungen durch Unter- bzw. Überlauf von Daten auftreten.

Wenn die Audiodaten im Encoder mit variabler Rate komprimiert werden und entsprechend mit variabler Frequenz übertragen werden, steht im Decoder kein Signal mehr zur Verfügung, aus welchem die zweite Abtastfrequenz durch eine PLL gewonnen werden könnte. In diesem Fall ist nur eine externe Synchronisation möglich.

### Darstellung der Erfindung

Der Erfindung liegt die Aufgabe zugrunde, ein Verfahren zur Übertragung digitaler Daten anzugeben, das eine starre Synchronisation zwischen Eingangs- und Ausgangs-Abtastfrequenz der signalverarbeitenden Einrichtung erübrigt.

Diese Aufgabe wird durch ein Verfahren mit den Merkmalen des Anspruchs 1 gelöst.

Die zweite Taktfrequenz wird erfindungsgemäß durch einen steuerbaren Oszillator (4) bereitgestellt, wobei zur Steuerung der zweiten Taktfrequenz (fₐ₂) die aktuelle Übertragungsfrquenz (f_{V}) bestimmt und aus dem, dem Decoder (2b) zugeführten Bitstrom eine mittlere Datenrate gewonnen wird, aus der durch Verknüpfung mit der aktuellen Übertragungsfrequenz (f_{V}) ein Sollwert der zweiten Taktfrequenz (fₐ₂) ermittelt wird.

Vorteilhafte Ausgestaltungen und Weiterbildungen der Erfindung sind in den Unteransprüchen gekennzeichnet.

In vielen Anwendungsfällen stimmt die Zahl der Eingangs-Abtastwerte mit der der Ausgangs-Abtastwerte überein. Dieser Tatsache trägt Anspruch 2 Rechnung.

Einen besonders wichtigen Anwendungsfall stellt die Audio-Signalverarbeitung dar. Deshalb ist gemäß Anspruch 3 vorgesehen, daß die signalverarbeitenden Einrichtungen aus einem Audio-Encoder und einem Audio-Decoder, die über eine geeignete Leitung miteinander verbunden sind. Im Encoder werden die aus einer Audio-Quelle stammenden digitalen Eingangsdaten komprimiert und codiert und als Bitstrom an die Übertragungsleitung gegeben. Die übertragenen Daten werden im Decoder decodiert und dekomprimiert und einem Audioverbraucher zugeführt. Der Audioverbraucher kann beispielsweise ein Digital/Analogumsetzer mit nachgeschaltetem Verstärker und Lautsprecher sein. Erfindungsgemäß ist es nicht mehr notwendig, daß die Taktfrequenzen des beispielsweise bei einem zentralen Musikanbieter aufgestellten Encoders und des räumlich weit davon, beim Endverbraucher betriebenen Decoders, synchronisiert sind.

Die zweite Taktfrequenz, mit der der ankommende Bitstrom im Decoder verarbeitet wird, wird unter Zuhilfenahme des steuerbaren Oszillators den jeweiligen Erfordernissen angepaßt. Die Steuergröße wird dabei aus dem aktuellen Status der Signalverarbeitung im Decoder gewonnen.

Nach Anspruch 4 ist es vorteilhaft, die Verbindung zwischen dem Musikanbieter und dem Endverbraucher, also zwischen Encoder und Decoder mit einer ISDN-Leitung herzustellen. Dadurch wird auf eine bestehende, kommerziell nutzbare Verbindungsmöglichkeit zurückgegriffen, ohne zusätzliche Verbindungswege schaffen zu müssen. Selbstverständlich kann auch auf andere Netzwerke (z. B. Ethernet) zurückgegriffen werden.

Eine besonders vorteilhafte Ausgestaltung des erfindungsgemäßen Verfahrens ist in Anspruch 5 gekennzeichnet. Das Verfahren ist an ein Codierverfahren angepaßt, bei welchem die Daten im Audio-Encoder mit einem variablen Kompressionsverhältnis komprimiert werden, das der Verbindung zwischen Encoder und Decoder angepaßt ist. Der Encoder komprimiert die Daten immer so stark, daß sie über die gewählte Verbindung, z. B. eine ISDN-Leitung übertragen werden können. Dadurch wird stets die maximal zur Verfügung stehende Kapazität der Übertragungsleitung ausgenutzt, auch wenn die Menge der von der Signalquelle gelieferten Daten schwankt oder ein Teil der Übertragungskapazität zeitweise nicht für die Musikdaten zur Verfügung steht. Dies tritt bei einer dynamischen Zuteilung eines Teils der Übertragungsleitung für andere Dienste, z. B. für Steuerinformationen für den Verbraucher, auf. Das erfindungsgemäße Verfahren sorgt dafür, daß die zweite Taktfrequenz, also die Taktfrequenz des Decoders, stabil bleibt, auch wenn sich das jeweilige Kompressionsverhältnis ändert.

Nach Anspruch 6 kann die Steuerung des Oszillators auch so erfolgen, daß die zweite Taktfrequenz auf einen gewünschten Wert einstellbar ist. Diese Ausgestaltung der Erfindung erlaubt es, bei der Wiedergabe gespeicherter Musikdaten die nominale Taktfrequenz gewollt zu variieren. Damit ist eine einfache Methode des sogenannten "Pitch-Control" gegeben, also der fein gestuften Beeinflussung der Wiedergabefrequenz in einem weiten Bereich.

Bei einer Weiterbildung des Verfahrens gemäß Anspruch 7 weist die signalverarbeitende Einrichtung einen Datenpuffer auf. Die Menge der momentan im Datenpuffer enthaltenen Daten ist einfach feststellbar. Beispielsweise kann beim Füllen des Datenpuffers ein Sonreibzeiger und beim Entleeren des Puffers ein Lesezeiger mitgeführt werden. Die Differenz zwischen Schreib- und Lesezeiger gibt den Füllstand an, der einen geeigneten Status der Signalverarbeitung in der Einrichtung darstellt und deshalb zur Steuerung der zweiten Taktfrequenz eingesetzt wird.

Ein weiterer Status der Signalverarbeitung in der zweiten signalverarbeitenden Einrichtung, ist der Unterschied zwischen der Menge der über die Datentransfereinrichtung einfließenden und der an den Signalempfänger geleiteten Daten. Nach Anspruch 8 wird der Unterschied dieser Datenmengen zur Steuerung der zweiten Taktfrequenz verwendet, indem blockweise ermittelt wird, wieviele Daten in die zweite signalverarbeitende Einrichtung einfließen und wieviele ausgegeben werden. Dies geschieht nach Anspruch 9 dadurch, daß aus dem der zweiten signalverarbeitenden Einrichtung (2b) zugeführten Bitstrom eine mittlere Datenrate gewonnen wird, aus der durch Verknüpfung mit der gemessenen Übertragungsfrequnez ein Sollwert der zweiten Taktfrequenz ermittelt wird, dem die aktuelle zweite Taktfrequenz angepaßt wird.

Die mittlere Datenrate wird gemäß Anspruch 10 aus der System-Information des Bitstroms gewonnen, indem über die Datenrate pro Block gemittelt wird. Dabei können durch die Mittelwertbildung Fehler auftreten. Um ein durch einen Fehler bedingtes Über- bzw. Unterlaufen zu vermeiden, wird die mittlere Datenrate während der Regelung kontinuierlich den aktuellen Erfordernissen angepaßt.

Bei einer Ausgestaltung der Erfindung nach Anspruch 11 wird ein numerisch steuerbarer Oszillator eingesetzt. Demgemäß wird eine Größe bestimmt, die dem aktuellen Status der Signalverarbeitung in der zweiten signalverarbeitenden Einrichtung entspricht.

Nach Anspruch 12 wird zur Bereitstellung der zweiten Taktfrequenz ein mittels elektrischer Spannung steuerbarer Oszillator verwendet. Die Steuerspannung wird mit Hilfe eines Signalprozessors erzeugt. Hierzu wird aus der Abweichung der aktuellen zweiten Taktfrequenz von dem aus dem aktuellen Status des Decoders ermittelten Sollwert eine Steuerspannung gebildet, die den aktuellen Wert dem Sollwert der zweiten Taktfrequenz anpaßt.

Um die aktuelle zweite Taktfrequenz bzw. die Übertragungsfrequenz der Datentransfereinrichtung zu ermitteln, wird nach Anspruch 13 mit Hilfe eines ersten Teilers aus einem Schwingquarz ein Zeitnormal gewonnen. Im zeitlichen Abstand dieses Zeitnormals werden durch den Teiler im Signalprozessor Impulse ausgelöst. Im Signalprozessor werden jeweils zwischen zwei Impulsen die Schwingungen des steuerbaren Oszillators bzw. der Übertragungsfrequenz gezählt. Aus der Zahl der Schwingungen pro Zeitnormal wird die aktuelle Taktfrequenz bzw. die Übertragungsfrequenz bestimmt.

Wenn die zweite Taktfrequenz bzw. die Übertragungsfrequenz sehr hohe Werte annimmt, kann der Signalprozessor den Takt nicht direkt zählen. Deshalb wird nach Anspruch 14 die Taktfrequenz des steuerbaren Oszillators bzw. die Übertragungsfrequenz durch den zweiten Teiler durch einen vorgebbaren Wert geteilt und anschließend dem Signalprozessor zum Zählen zugeführt. Zum Zeitpunkt der Frequenzmessung (Zeitnormal) wird der Zählerstand des zweiten Zählers in einem Latch (Flipflop zur Speicherung von Informationen) festgehalten und anschließend vom Signalprozessor ausgelesen. Auf diese Weise ist im Signalprozessor die Information über die Zahl der Schwingungen des steuerbaren Oszillators bzw. der Übertragungsfrequenz innerhalb des Zeitnormals vorhanden, so daß die aktuelle zweite Taktfrequenz bzw. die Übertragungsfrequenz ermittelt werden kann.

Wenn die zweite Abtastfrequenz bzw. die Übertragungsfrequenz im Verhältnis zur Frequenz des Quarzes sehr niederfrequent ist, bietet das in Anspruch 15 gekennzeichnete Verfahren Vorteile. Danach werden zur Bestimmung der aktuellen Abtastfrequenz bzw. der Übertragungsfrequenz jeweils nach einer vorgebbaren Zahl von Schwingungen des steuerbaren Oszillators mit Hilfe des zweiten Teilers Impulse erzeugt und an den Signalprozessor geleitet. Zwischen den Impulsen werden im Signalprozessor die Schwingungen eines als Zeitnormal dienenden Schwingquarzes gezählt und daraus die aktuelle Frequenz des steuerbaren Oszillators bzw. der Übertragung bestimmt.

Bei sehr hohen Quarzfrequenzen werden die Schwingungen des Quarzes nicht unmittelbar im Signalprozessor gezählt, sondern gemäß Anspruch 16 dem ersten Teiler zugeführt. Der Zählerstand dieses Teilers wird jeweils zu den Impulsen, die nach einer vorgebbaren Zahl von Schwingungen durch den zweiten Teiler ausgelöst werden, in einem Latch festgehalten und anschließend vom Signalprozessor gelesen. Aus der Anzahl der Zeitnormale, die zwischen den Impulsen liegen, wird die aktuelle zweite Taktfrequenz bzw. die Übertragungsfrequenz ermittelt.

Nach Anspruch 17 wird der interne Schwingquarz des Signalprozessors als Zeitnormal herangezogen. Dadurch wird der Einsatz eines zusätzlichen Schwingquarzes überflüssig.

Bei einer vorteilhaften Ausgestaltung der Erfindung wird nach Anspruch 18 die Steuerspannung mittels zweier mit dem Signalprozessor verbundenen, schaltbaren Stromquellen erzeugt, deren Ausgänge auf einen Kondensator führen. Die Spannung an diesem Kondensator, die durch den Signalprozessor gesteuert wird, indem die Stromquellen alternativ oder gemeinsam geschaltet werden, dient als Steuerspannung für den steuerbaren Oszillator.

Nach Anspruch 19 werden die Schwingungen des steuerbaren Oszillators über mehrere Perioden des Zeitnormals gezählt. Dadurch wird die Genauigkeit der Bestimmung der Taktfrequenz erhöht. Gemäß Anspruch 20 wird ein steuerbarer Quarzoszillator eingesetzt.

Die Vorteile der Erfindung bestehen insbesondere darin, daß Maßnahmen, die bisher zur Synchronisation der ersten und zweiten Taktfrequenz erforderlich waren, entfallen. Da keine feste Koppelung zwischen den Taktfrequenzen mehr besteht, ist das erfindungsgemäße Verfahren flexibler einsetzbar.

Die zweite Taktfrequenz kann ohne direkten Zugriff oder einen Hilfetakt erzeugt werden. Dies wirkt sich insbsondere vorteilhaft aus, wenn Encoder und Decoder räumlich weit voneinander entfernt sind. Mit dem erfindungsgemäßen Verfahren kann der Multiplikator k, der die Zahl der Ausgangsdaten von der Zahl der Eingangsdaten unterscheidet, einen beliebigen Wert annehmen und auch während des Betriebs geändert werden.

Ein besonderer Vorteil des Verfahrens besteht darin, daß das Ausmaß, mit welchem die zweite Taktfrequenz mit einem Jitter behaftet ist, weitgehend unabhängig vom Jitter der ersten Taktfrequenz ist und durch die Signalverarbeitung kontrollierbar ist, dadurch ist eine Reduzierung des Jitters des Eingangssignals möglich.

Ein weiterer Vorteil besteht darin, daß die Signalquelle nicht fremdsynchronisierbar sein muß. Damit kann beispielsweise ein beliebiger CD-Spieler als Quelle verwendet werden.

Das Verfahren kann auch eingesetzt werden, wenn die Übertragung der codierten Daten zwischen Encoder und Decoder über eine Strecke läuft, deren Übertragungsfrequenz nicht zur Erzeugung der Abtastfrequenz geeignet ist, wenn z. B. die Übertragung in unregelmäßigen Bursts erfolgt oder wenn die erste Abtastfrequenz mit einem sehr starken Jitter behaftet ist. Eine Übertragung ist auch dann möglich, wenn die Rate der Datenkompression und damit auch entsprechend die Übertragungsdatenrate schwankt.

Bei der Wedergabe von gespeicherten komprimierten Audiodaten ergibt sich ein weiterer Vorteil. Durch Vorgabe der zweiten Abtastfrequenz ist ohne zusätzliche Hardware eine "Pitch-Control" realisierbar.

### Kurze Beschreibung der Zeichnungen

Nachfolgend werden ohne Beschränkung der Allgemeinheit der Erfindung, bevorzugte Ausführungsbeispiele anhand der Figuren beschrieben.

Es zeigen:
- Figur 1:: Blockschaltbild des Übertragungsverfahrens
- Figur 2:: Blockschaltbild der Steuerung des mit Hilfe elektrischer Spannung steuerbaren Oszillators
- Figur 3:: Blockschaltbild für die Bestimmung der Übertragungsfrequenz und der aktuellen zweiten Taktfrequenz für die Steuerung der zweiten Taktfrequenz.

### Wege zur Ausführung der Erfindung

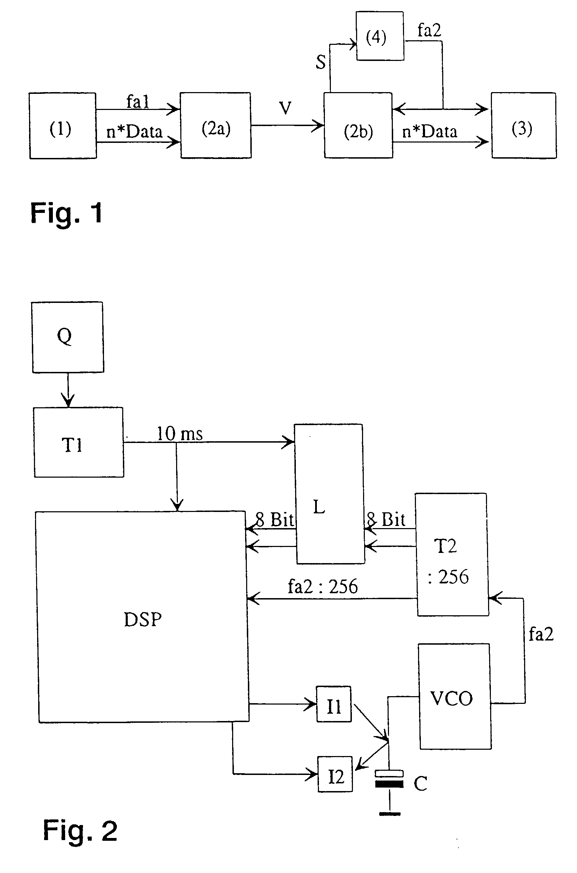

Das Blockschaltbild der Figur 1 zeigt eine Audio-Quelle (1), z. B. einen CD-Spieler, deren n digitale Ausgangs- Abtastwerte mit einer ersten Taktfrequenz (fₐ₁) einer ersten signalverarbeitenden Einrichtung (2a), einem Encoder, zugeführt werden. Im Encoder (2a) werden die digitalen Daten aus dem Zeitbereich in den Frequenzbereich überführt, und unter Ausnutzung psychoakustischer Gesetzmäßigkeiten komprimiert und codiert. Die codierten Daten werden mit Hilfe einer Datentransfereinrichtung (V) als Bitstrom in die zweite signalverarbeitende Einrichtung (2b), den Decoder geleitet. Im Decoder (2b) werden die Daten dekomprimiert und decodiert und aus dem frequenzbereich in den Zeitbereich zurückübertragen. Anschließend werden die dabei entstehenden n Ausgangsdaten mit einer zweiten Taktfrequenz (fₐ₂) an einen Signalempfänger (3) gesendet, der beispielsweise aus einem Digital/Analog-Wandler, einem Verstärker und Lautsprechern besteht.

Zwischen der zweiten Taktfrequenz (fₐ₂), der Übertragungsfrequenz (f_{V}) und der ersten Taktfrequenz (fₐ₁) besteht keine feste Kopplung. Deshalb wird das Jitterverhalten der ersten Taktfrequenz (fₐ₁) und der Übertragungsfrequenz (fᵥ) nicht auf die Ausgabefrequenz, die zweite Taktfrequenz (fₐ₂) übertragen. Das Jitterverhalten der zweiten Taktfrequenz (fₐ₂) hängt nur von der Qualität der Erzeugung dieser Frequenz ab. Das Verfahren kann somit zur Reduzierung des Jitters eingesetzt werden.

Die Unabhängigkeit der Ausgangsfrequenz geht so weit, daß die Datentransfereinrichtung nicht über eine feste Frequnez (f_{V}) verfügen muß. Das Verfahren ist deshalb auch anwendbar, wenn die Übertragung der Signale sehr unregelmäßig, z. B. in Bursts erfolgt. Liegt jedoch eine definierte Übertragungsfrequenz fest, so kann diese vorteilhaft mit zur Steuerung der zweiten Taktfrequenz (fₐ₂) herangezogen werden.

Die Steuerung der zweiten Taktfrequenz (fₐ₂) erfolgt mit dem steuerbaren Oszillator (4). Zur Steuerung wird dabei eine Größe verwendet, die dem internen Verarbeitungszustand des Signals im Decoder entspricht. Dies wird in der Figur 1 durch den Pfeil (S) dargestellt. Der steuerbare Oszillator (4) kann ein numerisch steuerbarer oder durch elektrische Spannung steuerbarer Oszillator sein.

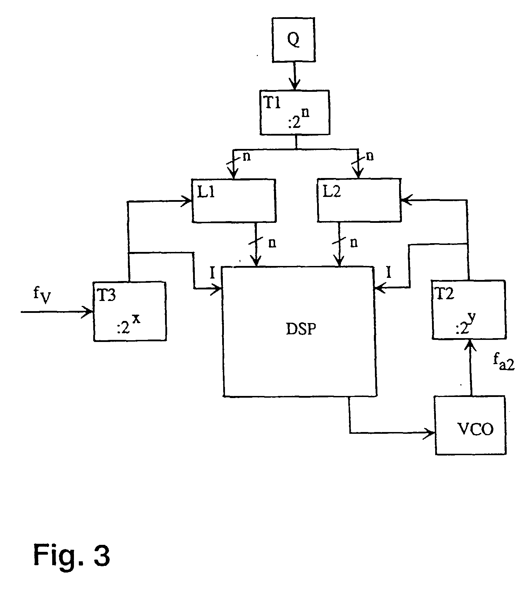

In den Figuren 2 und 3 sind Ausführungsbeispiele der Erfindung dargestellt, in denen zwei unterschiedliche Meßverfahren eingesetzt werden. Bei der zweiten Ausführungsform wird gemessen, wie viele Schwingungen innerhalb eines Zeitnormals (z. B. 10 ms) auftreten. Bei der dritten Ausführungsform wird gemessen, welche Zeit eine bestimmte Anzahl (z. B. 256) von Schwingungen benötigt. Beide Meßverfahren sind in beiden Ausführungsformen anwendbar. Aus dem in Figur 2 dargestellten Quarz (Q), der z. B. der System-Quarz des Signalprozessors (DSP) sein kann, wird durch den Teiler (T₁) ein Zeitnormal gewonnen, mit dessen Hilfe die Frequenz des steuerbaren Quarz (VCO) gemessen wird. Hierzu wird mit dem Zeitnormal, z. B. alle 10 ms, ein Impuls im Signalprozessor (DSP) ausgelöst. Dieser zählt die Schwingungen des steuerbaren Quarz (VCO) zwischen zwei Impulsen und errechnet daraus die aktuelle zweite Taktfrequenz (fₐ₂). Wenn die zweite Taktfrequen (fₐ₂) sehr hohe Werte annimmt (z. B. 256 * 44,1 kHz = 11,2896 MHz), ist es vorteilhaft, den Takt nicht unmittelbar im Signalprozessor zu zählen. Der Takt wird durch den Teiler (T₂) durch eine vorgebbare Zahl (z. B. 256) geteilt und die geteilte Frequenz (fₐ₂ : 256) dem Signalprozessor (DSP) zum Zählen zugeführt. Zum Zeitpunkt der Frequenzmessung, der durch das Zeitnormal vorgegeben ist, wird der Zählerstand des Zählers (T₂) im Latch (L) festgehalten und anschließend vom Signalprozessor (DSP) ausgelesen. Aus der Zahl der Schwingungen des steuerbaren Oszillators (VCO) innerhalb des Zeitnormals (10 ms) wird im Signalprozessor (DSP) die aktuelle zweite Taktfrequen (fₐ₂) ermittelt.

Im Signalprozessor (DSP) wird der aktuelle Wert mit dem Sollwert der zweiten Taktfrequenz (fₐ₂) verglichen und die zur Angleichung erforderliche Spannung ermittelt. Der Signalprozessor steuert die Frequenz des steuerbaren Oszillators (VCO) über zwei schaltbare Stromquellen I₁ und I₂, deren Ausgänge mit einem Kondensator (C) verbunden sind. Die Spannung an dem Kondensator (C) ist die Steuerspannung für den Oszillator (VCO).

Die zugehörige Schaltung ist in einem Audio-Decoder mit geringem Aufwand realisierbar, da der Signalprozessor (DSP) und der Teiler (T₂) ohnehin im System vorhanden sind und das Zeitnormal aus Signalen, die im System bereits vorhanden sind, direkt ableitbar ist.

Für Anwendungen, bei denen eine quarzgenaue Übertragungstaktfrequenz (f_{V}) vorliegt, wie z. B. bei einer ISDN-Leitung, kann dieser Takt mit zur Steuerung des Oszillators (VCO) verwendet werden. Dazu wird aus dem, dem Decoder zugeführten, Bitstrom eine mittlere Kompressionsrate gewonnen, aus der durch Verknüpfung mit der gemessenen Übertragungsfrequenz (f_{V}) ein Sollwert der zweiten Taktfrequenz (fₐ₂) gebildet wird. Die aktuelle zweite Taktfrequenz wird ebenfalls bestimmt und im Signalprozessor mit dem Sollwert verglichen. Wie oben beschrieben, wird der aktuelle Wert des Oszillators über eine geeignete Steuerspannung, die mittels zweier schaltbarer Stromquellen I₁ und I₂ an einem Kondensator (C) bereitgestellt wird, gesteuert.

Das Blockschaltbild in Figur 3 zeigt den prinzipiellen Schaltungsaufbau zur Bestimmung der Übertragungsfrequenz (f_{V}) und der aktuellen zweiten Taktfrequenz. Die Übertragungsfrequenz (f_{V}) bzw. die zweite Taktfrequenz (fₐ₂) werden ermittelt, indem die Schwingungen des Quarzes (Q) während einer festen Anzahl von Schwingungen der Übertragungsfrequenz (f_{V}) bzw. der zweiten Taktfrequenz (fₐ₂) gezählt werden. Dazu werden f_{V} bzw. fₐ₂ in den Teilem T₃ bzw. T₂ durch den Faktor 2^{x} bzw. 2^{y} geteilt. Nach Erreichen der gewählten Anzahl der Schwingungen geben die Teiler T₂ und T₃ Impulse (I) an den Signalprozessor (DSP) und an die Latches L₁ bzw. L₂, In den Latches L₁ bzw. L₂ wird für jeden Impuls der aktuelle Stand des Teilers (T₁) festgehalten, der die Schwingungen des Quarzes (Q) zählt. Der Signalprozessor (DSP) liest aus den Latches L₁ bzw. L₂ die Zahl der Schwingungen des Quarzes (Q) während der vorgegebenen Zahl der Schwingungen von f_{V} bzw. fₐ₂ und berechnet daraus die Übertragungsfrequenz (f_{V}) und die aktuelle zweite Taktfrequenz (fₐ₂).

Wenn, wie in diesem Ausführungsbeispiel vorgesehen, die Frequenz des Quarzes (Q) im Teiler (T₁) um den Faktor 2ⁿ geteilt wird, müssen zur Übertragung der Zahl der Schwingungen des Quarzes (Q) auf die Latches L₁ bzw. L₂ sowie auf den Signalprozessor (DSP) jeweils n Verbindungskabel eingesetzt werden. Die ist in der Zeichnung durch Schrägstriche angedeutet.

Da die Messung von f_{V} bzw. fₐ₂ nicht gleichzeitig erfolgen muß, können die Latches L₁ und L₂ durch ein einziges Latch ersetzt werden, das dann abwechselnd für die Messung der Übertragungsfrequenz (f_{V}) und der zweiten Taktfrequenz (fₐ₂) eingesetzt wird.

## Patentansprüche

1. Verfahren zur Übertragung digitaler Daten, insbesondere von Audiosignalen, bei welchem n digitale Eingangs-Abtastwerte mit einer ersten Taktfrequenz (fₐ₁) aus einer Signalquelle (1) in einen Encoder (2a) geleitet, codiert und als Bitstrom über eine Datenleitung (V) mit einer Übertragungsfrequenz (f_{V}) in einen Decoder (2b) übertragen, decodiert und die decodierten Daten als n * k₁ /k₂ Ausgangs-Abtastwerte (k₁, k₂ = 1,2,3...) mit einer zweiten Taktfrequenz (fₐ₂) an einen Signalempfänger (3) geleitet werden,
**dadurch gekennzeichnet,**
daß die zweite Taktfrequenz (fₐ₂) durch einen steuerbaren Oszillator (4) bereitgestellt wird, wobei zur Steuerung der zweiten Taktfrequenz (fₐ₂) die aktuelle Übertragungsfrequenz (f_{V}) bestimmt und aus dem, dem Decoder (2b) zugeführten Bitstrom eine mittlere Datenrate gewonnen wird, aus der durch Verknüpfung mit der aktuellen Übertragungsfrequenz (f_{V}) ein Sollwert der zweiten Taktfrequenz (fₐ₂) ermittelt wird.

2. Verfahren nach Anspruch 1,
**dadurch gekennzeichnet,**
daß die Zahl der Eingangs-Abtastwerte gleich der Zahl der Ausgangs-Abtastwerte ist.

3. Verfahren nach Anspruch 1 oder 2,
**dadurch gekennzeichnet,**
daß die Signalquelle (1) eine Audio-Quelle, der Encoder (2a) ein Audio-Encoder, der Decoder (2b) ein Audio-Decoder und der Signalempfänger (3) ein Audio-Verbraucher ist, und daß die digitalen Daten blockweise verarbeitet und übertragen werden.

4. Verfahren nach einem der Ansprüche 1 bis 3,
**dadurch gekennzeichnet,**
daß die Datenleitung (V) zwischen dem Encoder (2a) und dem Decoder (2b) eine ISDN-Verbindung oder ein Netzwerk ist.

5. Verfahren nach Anspruch 3 oder 4,
**dadurch gekennzeichnet,**
daß die Daten im Audio-Encoder (2a) mit einem variablen, der Datentransfereinrichtung angepaßten, Kompressionsverhältnis komprimert werden.

6. Verfahren nach einem der Ansprüche 1 bis 5,
**dadurch gekennzeichnet,**
daß die Datenleitung (V) die Daten mit einer definierten Übertragungsfrequenz (f_{V}) überträgt, und daß zur Steuerung der zweiten Taktfrequenz (fₐ₂) im Decoder (2b) der Unterschied zwischen der Menge der über die Datenleitung (V) übertragenen Daten zu der an den Signalempfänger (3) geleiteten Daten, verwendet wird.

7. Verfahren nach einem der Ansprüche 1 bis 6,
**dadurch gekennzeichnet,**
daß die mittlere Datenrate aus der im Bitstrom enthaltenen Information gewonnen wird, indem über die pro Block verwendete Datenrate gemittelt wird.

8. Verfahren nach einem der Ansprüche 1 bis 7,
**dadurch gekennzeichnet,**
daß zur Bereitstellung der zweiten Taktfrequenz (fₐ₂) ein numerisch steuerbarer Oszillator verwendet wird, der unmittelbar über eine numerische Größe gesteuert wird, die dem Sollwert der zweiten Taktfrequenz entspricht.

9. Verfahren nach einem der Ansprüche 1 bis 8,
**dadurch gekennzeichnet,**
daß zur Bereitstellung der zweiten Taktfrequenz (fₐ₂) ein mittels elektrischer Spannung steuerbarer Oszillator (VCO) verwendet wird, daß die Steuerspannung mittels eines Signalprozessors (DSP) erzeugt wird, wobei in dem Signalprozessor (DSP) eine Größe, die der aktuellen zweiten Taktfrequenz entspricht, mit dem Sollwert der zweiten Taktfrequenz (fₐ₂) verglichen wird, und daß durch die daraus ermittelte Steuerspannung der aktuelle Wert dem Sollwert angepaßt wird.

10. Verfahren nach Anspruch 9,
**dadurch gekennzeichnet,**
daß zur Bestimmung der Größe, die der aktuellen zweiten Taktfrequenz (fₐ₂) bzw. der Übertragungsfrequenz (f_{V}) entspricht, aus einem Schwingquarz (Q) mittels eines ersten Teilers (T₁) ein Zeitnormal gewonnen wird, daß in Abständen dieses Zeitnormals durch den Teiler (T₁) in dem Signalprozessor (DSP) Impulse ausgelöst werden, daß jeweils zwischen zwei Impulsen in dem Signalprozessor (DSP) die Schwingungen des steuerbaren Oszillators (VCO) bzw. der Übertragungsfrquenz (f_{V}) gezählt werden und daraus die aktuelle Frequenz bestimmt wird.

11. Verfahren nach Anspruch 9 oder 10,
**dadurch gekennzeichnet,**
daß die Anzahl der Schwingungen des steuerbaren Oszillators (VCO) bzw. der Übertragungsfrequenz (f_{V}) vor der Zählung im Signalprozessor (DSP) in einem zweiten Teiler (T₂) durch einen vorgebbaren Wert geteilt, und die geteilte Frequenz dem Signalprozessor (DSP) zum Zählen zugeführt wird, daß in Abständen des Zeitnormals der Zählerstand des zweiten Teilers (T₂) in einem Latch festgehalten und anschließend vom Signalprozessor ausgelesen wird.

12. Verfahren nach Anspruch 9,
**dadurch gekennzeichnet,**
daß zur Bestimmung der Größe, die der aktuellen zweiten Taktfrequenz (fₐ₂) bzw. der Übertragungsfrequenz (f_{V}) entspricht, jeweils nach einer vorgebbaren Zahl von Schwingungen des steuerbaren Oszillators (VCO) bzw. der Übertragungsfrequenz (f_{V}) durch einen zweiten Teiler (T₂, T₃) Impulse erzeugt werden, daß jeweils zwischen den Impulsen im Signalprozessor (DSP) die Schwingungen eines als Zeitnormal dienenden Schwingquarzes (Q) gezählt werden und daraus die aktuelle Frequenz des steuerbaren Oszillators (VCO) bzw. der Übertragung bestimmt wird.

13. Verfahren nach Anspruch 12,
**dadurch gekennzeichnet,**
daß die Schwingungen des Quarzes (Q) vor der Zählung im Signalprozessor (DSP) einem ersten Teiler (T₁) zugeführt werden, daß der Zählerstand dieses Teilers in den Abständen der Impulse in einem Latch (L₁, L₂) festgehalten und anschließend vom Signalprozessor (DSP) ausgelesen wird.

14. Verfahren nach einem der Ansprüche 10 bis 13,
**dadurch gekennzeichnet,**
daß der Schwingquarz (Q) der interne Schwingquarz des Signalprozessors (DSP) ist.

15. Verfahren nach einem der Ansprüche 9 bis 14,
**dadurch gekennzeichnet,**
daß die Steuerspannung mittels zweier mit dem Signalprozessor verbundenen Stromquellen (I₁, I₂) an einem Kondensator (C) erzeugt wird, der mit dem Spannungs-Eingang des steuerbaren Oszillators (VCO) verbunden ist.

16. Verfahren nach einem der Ansprüche 9 bis 15,
**dadurch gekennzeichnet,**
daß die Schwingungen des steuerbaren Oszillators (VCO) über mehrere Perioden des Zeitnormals gezählt werden.

17. Verfahren nach einem der Ansprüche 9 bis 16,
**dadurch gekennzeichnet,**
daß ein mittels elektrischer Spannung steuerbarer Quarzoszillator verwendet wird.

## Claims

1. Method of transmitting digital data, particularly audio signals, in which method n digital input sampled values with a first clock frequency (fₐ₁) are passed from a signal source (1) into an encoder (2a), coded and transmitted as a bit stream via a data link (V) with a transmission frequency (f_{V}) to a decoder (2b), decoded and the decoded data passed as n*k₁/k₂ output sampled values (k₁, k₂ = 1,2,3...) with a second clock frequency (fₐ₂) to a signal receiver (3)
characterised in that
the second clock frequency (fₐ₂) is provided by a controllable oscillator (4), whereby for the control of the second clock frequency (fₐ₂) the actual transmission frequency (f_{V}) is determined and an average bit rate is obtained from the bit stream led into the decoder (2b) and from this bit rate, by concatenation with the actual transmission frequency (f_{V}), a desired value of the second clock frequency (fₐ₂) is calculated.

2. Method according to claim 1,
characterised in that
the number of the input sampled values is equal to the number of the output sampled values.

3. Method according to claim 1 or 2,
characterised in that
the signal source (1) is an audio source, the encoder (2a) is an audio encoder, the decoder (2b) is an audio decoder and the signal receiver (3) is an audio consumer, and in that the digital data is processed and transmitted in blocks.

4. Method according to one of claims 1 to 3,
characterised in that
the data link (V) between the encoder (2a) and the decoder (2b) is an ISDN-connection or a network.

5. Method according to claim 3 or 4,
characterised in that
the data are compressed in the audio encoder (2a) with a variable compression ratio adapted to the data transfer device.

6. Method according to one of claims 1 to 5,
characterised in that
the data link (V) transmits the data with a defined transmission frequency (f_{V}) and that for the control of the second clock frequency (fₐ₂) in the decoder (2b), the difference between the amount of the data transmitted via the data link (V) and the amount of the data passed to the signal receiver (3) is used.

7. Method according to one of claims 1 to 6,
characterised in that
the average bit rate is obtained from the information contained in the bit stream, whilst being averaged via the bit rate used per block.

8. Method according to one of claims 1 to 7,
characterised in that
for the provision of the second clock frequency (fₐ₂) a numerically controllable oscillator is used, which can be controlled directly via a numerical magnitude corresponding to the desired value of the second clock frequency.

9. Method according to one of claims 1 to 8,
characterised in that
for the provision of the second clock frequency (fₐ₂) a voltage-controlled oscillator (VCO) is used, in that the control voltage is generated by means of a signal processor (DSP), whereby in the signal processor (DSP) a magnitudewhich corresponds to the actual second clock frequency is compared with the desired value of the second clock frequency (fₐ₂) and in that, by means of the control voltage ascertained therefrom, the actual value is adapted to the desired value.

10. Method according to claim 9,
characterised in that
for determining the magnitude which corresponds to the actual second clock frequency (fₐ₂) or the transmission frequency (f_{V}), a time standard is obtained from a quartz crystal (Q) by means of a first divider (T₁), in that pulses are released at intervals of this time standard by the divider (T₁) in the signal processor (DSP), in that, between every two pulses in the signal processor (DSP), the oscillations of the controllable oscillator (VCO) or the transmission frequency (f_{V}) are counted and the actual frequency determined therefrom.

11. Method according to claim 9 or 10,
characterised in that
the number of the oscillations of the controllable oscillator (VCO) or of the transmission frequency (f_{V}), before being counted in the signal processor (DSP), is divided in a second divider (T₂) by a value, which can be pre-set, and the divided frequency is passed to the signal processor (DSP) for counting, and in that in intervals of the time standard the count of the second divider (T₂) is held in a latch and then read out by the signal processor.

12. Method according to claim 9,
characterised in that
for determining the magnitude which corresponds to the actual second clock frequency (fₐ₂) or the transmission frequency (f_{V}), pulses are created by a second divider (T₂,T₃), in each case according to a number, which can be pre-set, of oscillations of the controllable oscillator (VCO) or of the transmission frequency (f_{V}), and in that, respectively between the pulses in the signal processor (DSP), the oscillations of a quartz crystal (Q) serving as time standard are counted and the actual frequency of the controllable oscillator (VCO) or of the transmission is determined therefrom.

13. Method according to claim 12,
characterised in that
the oscillations of the quartz (Q), before being counted in the signal processor (DSP), are led into a first divider (T₁), in that the count of this divider in the intervals of the pulses is held in a latch (L₁,L₂) and then read out by the signal processor (DSP).

14. Method according to one of claims 10 to 13,
characterised in that
the quartz crystal (Q) is the internal quartz crystal of the signal processor (DSP).

15. Method according to one of claims 9 to 14,
characterised in that
the control voltage is produced on a capacitator (C) by means of two power sources (I₁,I₂) connected to the signal processor and the capacitator is connected to the voltage input of the controllable oscillator (VCO).

16. Method according to one of claims 9 to 15,
characterised in that
the oscillations of the controllable oscillator (VCO) are counted over several periods of the time standard.

17. Method according to one of claims 9 to 16,
characterised in that
a quarz oscillator controllable by means of electrical voltage is used.

## Revendications

1. Procédé de transmission de données numériques notamment de signaux audio à l'aide desquels on code n valeurs de détection d'entrée, numériques suivant une première fréquence d'horloge (fₐ₁) provenant d'une source de signaux (1) dans un codeur (2a), on les code et on les transmet comme flux de bits par une ligne de données (V) à la fréquence de transmission (f_{V}) dans un décodeur (2b) pour les décoder et les données décodées sont transmises comme valeurs de détection de sortie n * k₁/k₂ (k₁, k₂ = 1, 2, 3 ...) suivant une seconde fréquence d'horloge (fₐ₂) à un récepteur de signal (3),
caractérisé en ce que
la seconde fréquence d'horloge (fₐ₂) est fournie par un oscillateur commandé (4), la commande de la seconde fréquence d'horloge (fₐ₂) définissant la fréquence de transmission instantanée (f_{V}) et à partir du flux de bits appliqué au décodeur (2b), on forme un débit de données moyen qui, par combinaison avec la fréquence de transmission instantanée (f_{V}) donne une valeur de consigne pour la seconde fréquence d'horloge (fₐ₂).

2. Procédé selon la revendication 1,
caractérisé en ce que
le nombre des valeurs de détection d'entrée est égal au nombre des valeurs de détection de sortie.

3. Procédé selon la revendication 1 ou 2,
caractérisé en ce que
la source de signaux (1) est une source audio, le codeur (2a) est un codeur audio, le décodeur (2b) est un décodeur audio et le récepteur de signaux (3) est un utilisateur audio, et les données numériques sont travaillées et traitées par blocs.

4. Procédé selon l'une quelconque des revendications 1 à 3,
caractérisé en ce que
la ligne de données (V) entre le codeur (2a) et le décodeur (2b) est une liaison ISDN d'un réseau.

5. Procédé selon la revendication 3 ou 4,
caractérisé en ce que
les données sont comprimées dans le codeur audio (2a) suivant un rapport de compression variable adapté à l'installation de transfert de données.

6. Procédé selon l'une des revendications 1 à 5,
caractérisé en ce que
la ligne de données (V) transmet les données à une fréquence de transmission (f_{V}) définie et pour commander la seconde fréquence d'horloge (fₐ₂) dans le décodeur (2b), on utilise la différence entre le montage des données transmises par la ligne de données et celle des données reçues par le récepteur de signal (3).

7. Procédé selon l'une des revendications 1 à 6,
caractérisé en ce que
le débit moyen de données est obtenu à partir de l'information contenue dans le flux de bits en faisant la moyenne par blocs du taux de données utilisé.

8. Procédé selon l'une des revendications 1 à 7,
caractérisé en ce que
pour fournir la seconde fréquence d'horloge (fₐ₂), on utilise un oscillateur à commande numérique lui-même commandé directement par une grandeur numérique correspondant à la valeur de consigne de la seconde fréquence d'horloge.

9. Procédé selon l'une des revendications 1 à 8,
caractérisé en ce que
pour fournir la seconde fréquence d'horloge (fₐ₂), on utilise un oscillateur VCO commandé en tension et la tension de commande est générée par un processeur de signal DSP, le processeur de signal DSP comparant une grandeur correspondant à la seconde fréquence d'horloge, instantanée à la valeur de consigne de la seconde fréquence d'horloge (fₐ₂) et la valeur instantanée de la valeur de consigne est adaptée par la tension de commande déduite de la comparaison.

10. Procédé selon la revendication 9,
caractérisé en ce que
pour déterminer la grandeur correspondant à la seconde fréquence d'horloge instantanée (fₐ₂) ou à la fréquence de transmission (f_{V}), à partir d'un quartz oscillant (Q), à l'aide d'un premier diviseur (T₁), on forme une norme de temps, et des intervalles de cette norme de temps, le diviseur (T₁) déclenche des impulsions dans le processeur de signal DSP, ces impulsions étant définies chaque fois entre deux impulsions du processeur de signal DSP, pour compter les oscillations de l'oscillateur commandé VCO ou de la fréquence de transmission (f_{V}) pour en déduire la fréquence instantanée.

11. Procédé selon la revendication 9 ou 10,
caractérisé en ce qu'
on divise le nombre d'oscillations de l'oscillateur commandé VCO ou de la fréquence de transmission (f_{V}) avant le comptage dans le microprocesseur DSP, dans la seconde partie (T₂), par une valeur prédéterminée et la fréquence divisée est appliquée au processeur de signal DSP pour le comptage, de sorte qu'à intervalle de temps normal, l'état de comptage du second diviseur (T₂) est enregistré dans un verrou, puis est extrait par le processeur de signal.

12. Procédé selon la revendication 9,
caractérisé en ce que
pour déterminer la grandeur correspondant à la seconde fréquence d'horloge (fₐ₂) instantanée ou à la fréquence de transmission (f_{V}), chaque fois après un nombre prédéterminé d'oscillations fournies par l'oscillateur commandé VCO ou la fréquence de transmission (f_{V}), on génère les impulsions par un second diviseur (T₂, T₃) et de sorte que, entre chaque fois les impulsions dans le processeur de signal DSP, on compte les oscillations d'un quartz oscillant Q servant de norme de temps et on détermine la fréquence instantanée de l'oscillateur commandé VCO ou de la transmission.

13. Procédé selon la revendication 12,
caractérisé en ce que
les oscillations du quartz Q sont appliquées à un premier diviseur (T₁) avant le comptage dans le processeur de signal DSP et on maintient l'état de comptage de ce diviseur à des intervalles d'impulsions dans le verrou (L₁, L₂), puis on les lit par le processeur de signal DSP.

14. Procédé selon l'une des revendications 10 à 13,
caractérisé en ce que
le quartz oscillant Q est le quartz oscillant interne du processeur de signal DSP.

15. Procédé selon l'une des revendications 9 à 14,
caractérisé en ce qu'
on génère la tension de commande sur un condensateur C à l'aide de deux sources de courant (I₁, I₂) reliées au processeur de signal, ce condensateur étant relié à l'entrée de tension de l'oscillateur commandé VCO.

16. Procédé selon l'une des revendications 9 à 15,
caractérisé en ce qu'
on compte les oscillations de l'oscillateur commandé VCO sur plusieurs périodes de la norme de temps.

17. Procédé selon l'une des revendications 9 à 16,
caractérisé en ce qu'
on utilise un oscillateur à quartz commandé par une tension électrique.
